# EUROPEAN PATENT APPLICATION

(11) **EP 2 189 904 A1**
(43) Date of publication of application: **26.05.2010**
(21) Application number: 09175322.8
(22) Date of filing: 06.11.2009
(51) Int. Cl.: G06F 9/46

(54) **Systems and methods for electronically routing data**

(30) Priority: 19.11.2008 US 273828
(71) Applicant: General Electric Company, Schenectady, NY 12345 (US)
(72) Inventor: Williams, Scott Terrell, Minden NV 89423 (US); Schmid, James Joseph, Kirkland WA 98034 (US); Holzbauer, Bryan Alexander, Gardnerville NV 89460 (US)
(74) Representative: Gray, Thomas

(57) **Abstract**

Systems and methods for electronically routing data are provided. A data hub (106) for electronically routing data is disclosed. The data hub (106) may include an interface module (110) that receives an electronic communication (300) from a data source (102a-n, 104a-n, 122, 124). The electronic communication (300) may include a destination identifier (302) associated with an intended destination (102a-n, 104a-n, 122, 124) for the communication (300), a source identifier (304) associated with the data source (102a-n, 104a-n, 122, 124), a command identifier (306) associated with a command (308) included in the communication (300), and a payload that includes data (310) associated with the command (308). Further, the data hub (106) may include a routing module (116) that determines the intended destination (102a-n, 104a-n, 122, 124) based at least in part on the destination identifier (302), and routes the electronic communication (300) to the intended destination (102a-n, 104a-n, 122, 124).

## Description

### FIELD OF THE INVENTION

This invention relates generally to data communication and more specifically, to providing systems and methods for electronically routing data.

### BACKGROUND OF THE INVENTION

A data communications network may provide a cost effective data transmission medium for applications that require high speed communications between different devices and software components. The basic functionality of a conventional data communications network is to facilitate communication between various devices or software components by connecting the devices or software components to the network.

In a typical computer system, components in the computer system are usually tightly coupled. Therefore, any change (for example, replacement, addition or removal) in any of these components may affect the rest of the components (for example, break communication between them) in the computer system. Thus, the existing communication mechanism may not be efficient.

Technology such as Distributed Component Object Model (DCOM) provides a Component Object Model (COM) to support communication among objects on different computer systems, which may be connected over a Local Area Network (LAN), a Wide Area Network (WAN), or the Internet. However, DCOM may be difficult to configure to pass through firewalls. Thus, the firewall and/or ports may be required to be configured to allow communication among objects. Moreover, codes for the communications that use DCOM typically cannot be modified. Additionally, the devices may have a proprietary interface and therefore, the communication with devices cannot be reused. Furthermore, with the development of the hardware of the devices, new protocols may be required to communicate with these devices.

Software architectures such as Service Oriented Architecture (SOA) and Enterprise Service Bus (ESB) may act as software versions of communication buses, for example, Universal Serial Bus (USB). SOA is an architecture that uses loosely coupled services to support the requirements of business processes and users. Similarly, ESB refers to a software architecture construct and provides foundational services for complex architectures via an event-driven and standard-based messaging engine (i.e., the communication bus). However, these architectures do not have knowledge of data termination. They only provide components that plug into the bus and listen to messages that are important to them. Moreover, these architectures may send data to destination(s) that are not supposed to receive them.

Furthermore, in one or more existing data networks, hardware devices have different communication interfaces and thus different components may need to have knowledge of all the different interfaces that are relevant. Also, different hardware devices may understand or communicate in different languages or protocols. For example, one hardware device may communicate via a TCP/IP protocol, another hardware device may communicate via Bluetooth and so on. Moreover, a data source may send different types of data to different types of destinations.

Accordingly, there is a need for systems and methods that electronically route data at relatively high speed. Additionally, there is a need for systems and methods that provide data termination knowledge and resolve cross-language compatibility between different hardware devices and/or software components during the electronic routing of data.

### BRIEF DESCRIPTION OF THE INVENTION

According to one embodiment of the invention, there is disclosed a data hub for electronically routing data within a computer or between different computers. The data hub may include an interface module that receives an electronic communication from a data source. The electronic communication may include a destination identifier associated with an intended destination for the communication, a command identifier associated with a command included in the communication, and a payload that includes data associated with the command. Further, the data hub may include a routing module that determines the intended destination based at least in part on the destination identifier. The routing module may further route the electronic communication to the intended destination.

According to another embodiment of the invention, there is disclosed a method for electronically routing data within a computer or between different computers. The method may include receiving an electronic communication from a data source. The electronic communication may include a destination identifier associated with an intended destination for the communication, a command identifier associated with a command included in the communication, and a payload that includes data associated with the command. The method may further include determining the intended destination based at least in part on the destination identifier, and routing the electronic communication to the intended destination.

Other embodiments, aspects, and features of the invention will become apparent to those skilled in the art from the following detailed description, the accompanying drawings, and the appended claims.

### BRIEF DESCRIPTION OF THE DRAWINGS:

There follows a detailed description of embodiments of the invention by way of example only with reference to the accompanying drawings, in which:
FIG. 1 is a block diagram of one example data hub system, according to an illustrative embodiment of the invention;
FIG. 2 is a depiction of one example routing table that may be utilized by a data hub in accordance with various embodiments of the invention;
FIG. 3 is a depiction of one example transport packet that may be communicated through a data hub in accordance with various embodiments of the invention;
FIG. 4 is a flowchart illustrating one example method for routing data through a data hub, according to an illustrative embodiment of the invention;
FIG. 5 is a depiction of one example generic data structure that may be communicated through a data hub in accordance with various embodiments of the invention; and
FIG. 6 is a flowchart of one example method for forming a generic data structure, according to an illustrative embodiment of the invention.

### DETAILED DESCRIPTION OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are methods and systems for electronically routing data within a computer. The system may include a data hub for communicating data at high speed. The data hub may include an interface module that receives an electronic communication from a data source. In accordance with one embodiment of the invention, the electronic communication may include a destination identifier associated with an intended destination for the communication, a source identifier associated with the data source, a command identifier associated with a command included in the communication, and a payload that includes data associated with the command. In various embodiments of the invention, the data source may be one or more Data Hub Plug-in's (DHPs) or clients and the intended destination may be one or more Data Hub Plug-in's (DHPs) and/or clients. Further, the data hub may include a routing module to determine the intended destination based on the destination identifier and route the electronic communication to the intended destination.

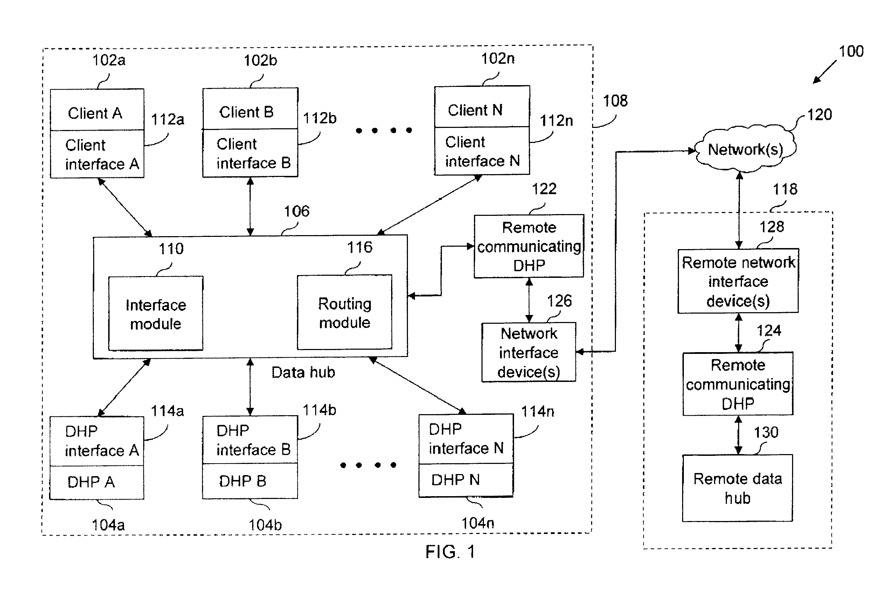

FIG. 1 is a block diagram of one example data hub system 100, according to an illustrative embodiment of the invention. FIG. 1 illustrates an example software architecture for communicating data between any number of clients, such as clients 102a-n and/or any number of DHPs, such as DHPs 104a-n, through a data hub 106. For purposes of this disclosure, the clients 102a-n and DHPs 104a-n may be collectively referred to as modules. According to an aspect of the invention, the software architecture provides a generic command set based protocol that allows for the data to be exchanged or communicated at relatively high speed. In order to achieve relatively high speed data communication, the software architecture may be a point-to-point architecture, i.e., the data hub 106 may pass data from a source to one or more intended destination(s) in a one-to-one manner. Therefore, modules in the data hub system 100 that are not supposed to get the data remain unaffected. The data hub 106 may be a software module, integrated into or otherwise in communication with a computer system 108, and the data hub 106 may act as a router for the computer system 108 by facilitating communication or data transfers between different components (or modules) in the computer system 108. The various components or modules of the computer system 108 may include software and/or hardware components or modules.

Further, according to an aspect of the invention, the DHPs 104a-n may be loosely coupled plug-in modules associated with the computer system 108. The loose coupling among these modules may facilitate addition, replacement, and/or removal of the plug-in modules without affecting existing modules in the data hub system 100. In accordance with one embodiment of the invention, each DHP, such as the DHPs 104a-n, may be a process, program, memory location, memory device interface (for example, to a hard drive) etc. that can facilitate the processing of commands received and/or sent in the various communications between the DHPs 104 and/or the clients 102 through the data hub 106. Furthermore, a client may be a software module, inside the computer system 108, which facilitates the collection and/or processing of data. For example, a client may include a graphical user interface (GUI) that allows a user of the computer system 108 to set configuration values and/or display data in graphical representation. As another example, a client may include a software application that is executed on the computer system 108 and that processes various data, such as a kernel process, a user application, etc.

According to an aspect of the invention, at least one of the DHPs 104a-n or one of the clients 102a-n may act as a source for a command and/or data that is routed through the data hub 106 to a destination. Similarly, at least one of the clients 102a-n and/or the DHPs 104a-n may act as intended destinations for the routed commands and/or data. For purposes of this disclosure, the term "data source" may refer to a module or component that sends a data command or request to one or more intended destinations that may be another module or component in the data hub system 100. In an example embodiment of the invention, a client, such as the client 102a may send a data request to a DHP, such as the DHP 104a as a destination. The DHP 104a may process the data request and may respond with the requested data. According to an aspect of the invention, the destination may be either a client application executing on the computer system 108 (e.g., a configuration graphical user interface (GUI), a data visualization GUI, etc.), a data storage application on the computer system 108 (e.g., a database or other software-based data storage application), an interface to a data storage devices (e.g., a hard drive, disk drive, or other memory device), an interface to a data acquisition server, or an interface to data collection hardware on the computer system 108. Additionally, although a data request is described as a command that may be routed through the data hub 106, a wide variety of different commands may be routed by the data hub 106 as desired in various embodiments of the invention.

According to an aspect of the invention, the data hub 106 may include an interface module 110 that operates as an interface to receive an electronic communication such as a data request from the data source (for example, the client 102a or the DHP 104a). Additionally, various clients 102a-n may each include a respective client interface 112a-n. The client interfaces 112a-n may operate as interfaces that facilitate sending and receiving electronic communications to and from the data hub 106. Similarly, various DHPs 104a-n may each include a respective DHP interface 114a-n. These DHP interfaces 114a-n may operate as interfaces that facilitate sending and receiving electronic communications to and from the data hub 106. As desired in various embodiments of the invention, the client interfaces 112a-n and/or the DHP interfaces 114a-n may receive data request(s) and/or other commands from the data hub 106. Additionally, as desired in various embodiments of the invention, the client interfaces 112a-n and/or the DHP interfaces 114a-n may communicate response(s) for the received data request(s) and/or other commands to the data hub 106. Moreover, in various embodiments of the invention, any number of the client interfaces 112a-n, and/or the DHP interfaces 114a-n may be destination interface modules associated with the intended one or more destinations.

The data hub system 100 may further include a routing module 116 as a component of the data hub 106 or otherwise in communication with the data hub 106. According to an aspect of the invention, the routing module 116 may determine the intended one or more destinations of a communication. In certain embodiments, the determination of the one or more destinations may be facilitated by using one or more suitable routing tables associated with the routing module 116. Following the determination of one or more destinations, the routing module 116 may route the electronic communication, received at the interface module 110 of the data hub 106, to the one or more intended destinations. In one example embodiment of the invention, a client, such as the client 102b, may send a request to the interface module 110 for a DHP, such as the DHP 104b. The routing module 116 may route the communication received at the interface module 110 to the destination DHP 104b. According to an aspect of the invention, the routing module 116 may route the electronic communication, received from the data source, to an intended destination in a one-to-one or point to point manner.

The data communication described above discusses data transfer within a single computer (i.e., the computer system 108). However, the data transfer is not limited to a single computer, and may be extended to multiple computers and/or computer-based devices or systems. The design and architecture of the data hub 106 makes it a flexible module that may be used for remote communication between various computers. For example, as shown in FIG. 1, the data hub system 100 may include a second computer system 118 that communicates with the computer system 108 via one or more suitable networks 120. The second computer system 118 may be located remotely from the computer system 108, and hence the second computer system 118 may be referred to as the remote computer system 118. Although only a single remote computer 118 is illustrated in FIG. 1, any number of remote computers 118 may be utilized as desired in various embodiments of the invention. Additionally, the one or more suitable networks 120 may be any wired and/or wireless networks that connect the two or more computer systems, such as a local area network, a wide area network, etc. The communication between the computer system 108 and the remote computer system 118 may be via any suitable communication protocol or communication protocols as desired in various embodiments of the invention, for example, a Transmission Control Protocol / Internet Protocol (TCP/IP) protocol.

In order to facilitate communication between the computer system 108 and the remote computer system 118, remote communicating DHPs may be utilized in the computer system 108 and the remote computer system 118. For example, as shown in the FIG. 1, a first remote communicating DHP 122 may be included in the computer system 108, and a second remote communicating DHP 124 may be utilized in the remote computer system 118. The first remote communicating DHP 122 may be a plug-in module that is connected to the data hub 106 and to the one or more networks 120 via one or more suitable network interface devices 126. Each of the one or more network interface devices may transmit and receive data over at least one of the one or more networks 120. The first remote communicating DHP 122 may include an interface (not shown in the FIG. 1) operable to send and/or receive data from and to the remote computer system 118. Similarly, the second remote communicating DHP 124 may include an interface (not shown in the FIG. 1) operable to receive data from and to the computer system 108. The functionalities of the first remote communicating DHP 122 (or the second remote communicating DHP 124) and its interface may be same as the functionalities of the DHPs 104a-n and its respective interfaces 114a-n.

Further, as shown in the FIG. 1, the second remote communicating DHP 124 may be in communication with a remote network interface device 128 that may transmit and receive data over the one or more suitable networks 120. In certain embodiments of the invention, the network interface device 126 and the remote network interface device 128 may be hardware components with associated software. One example of the network interface device 126 (or the network interface device 128) may be an Ethernet card.

Embodiments of the invention may include at least one data hub in each computer system 108 and 118. For example, as shown in the FIG. 1, the computer system 108 may include the data hub 106, and the remote computer system 118 may include a remote data hub 130 that interfaces with the second remote communicating DHP 124 in order to send and receive data to and from the computer system 108 via the first remote communicating DHP 122. Each DHP may register with its corresponding data hub, in accordance with various embodiments of the invention. Moreover, a data hub, such as the data hub 106, may have access to client and/or DHP addresses for clients and/or DHPs in direct communication with the data hub 106 or in indirect communication with the data hub 106 via the remote data hub 130. As one example, the first remote communicating DHP 122 may communicate with the second remote communication DHP 124 in order to identify the DHPs that are in communication with the remote data hub 130. The data hub 106 and/or the first remote communicating DHP 122 may then assign unique DHP addresses to the identified DHPs in communication with the remote data hub 130, and the unique DHP addresses may be communicated to the second remote communicating DHP 124 and the remote data hub 130. The remote communicating DHP 124 may then register with the remote data hub 130 with all of the DHP addresses on the remote computer system 118. Thus, the remote data hub 130 may have unique identifiers as assigned by the data hub 106 for itself and any component connected to it. In an example embodiment of the invention, when the second remote communicating DHP 124 receives a message from the first remote communicating DHP 122, the second remote communicating DHP 124 and/or the remote data hub 130 may identify which computer system (i.e., the computer system 108 in this case) and which remote communicating DHP (i.e., the first remote communicating DHP 122 in this case) sent this message. The second remote communicating DHP 124 and/or the remote data hub 130 may then determine one or more desired destinations for the message, and the remote data hub 130 may route the message.

Because remote communicating DHPs 122 and 124 are registered modules, the software architecture shown in the FIG. 1 may facilitate secured communication between remotely located computer systems 108 and 118. Thus, the first remote communicating DHP 122 may act as a single point for adjustment in the computer system 108 and may facilitate communication with the remote computer system 118. Similarly, the second remote communicating DHP 124 may act as a single point for adjustment in the remote computer system 118 and may facilitate communication with the computer system 108. In an example embodiment of the invention, any DHP 104a-n (or the remote communicating DHP 122 or 124), connected to the data hub 106 (or the remote data hub 130) may be replaced or removed. Moreover, in accordance with one embodiment of the invention, additional DHP(s) may be added to the data hub system 100.

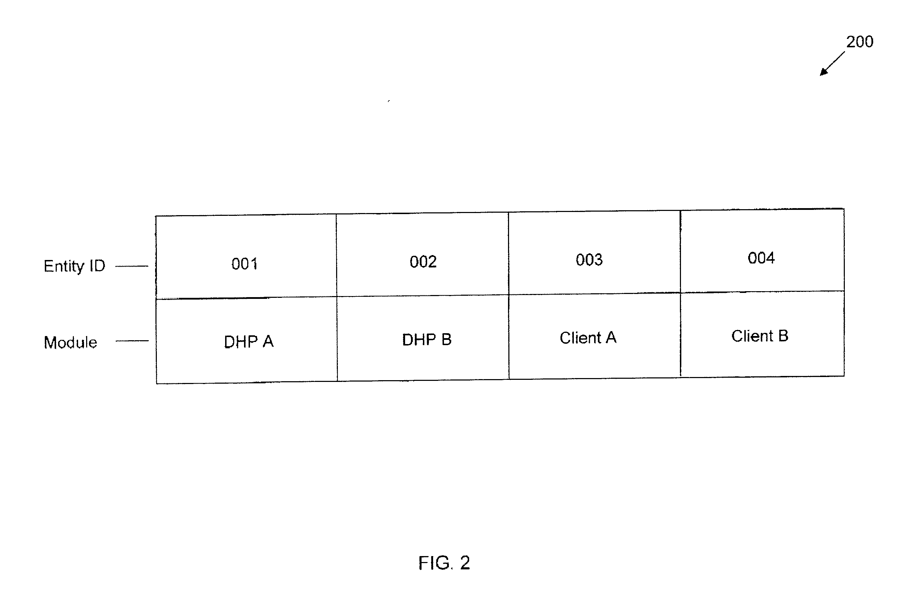

FIG. 2 is a depiction of one example routing table 200 that may be utilized by a data hub in accordance with various embodiments of the invention. The routing table 200 may include information associated with various modules connected to a data hub, such as the data hub 106 illustrated in FIG. 1. In an embodiment of the invention, these various modules may exchange data through the data hub 106. For example, as shown in FIG. 2, the routing table 200 may include information associated with modules DHP A, DHP B, client A and client B that are all connected to the data hub 106. The routing table 200 may also define an entity identifier (ID) for each of these modules. In one embodiment of the invention, a respective unique entity ID may be provided for each of the modules. For example, as shown in FIG. 2, the modules DHP A, DHP B, client A and client B have unique entity IDs 001, 002, 003, and 004 respectively. In an example embodiment of the invention, the entity IDs 001, 002, 003, and 004 may be stored source/destination identifiers.

According to an aspect of the invention, a routing module, such as the routing module 116 shown in FIG. 1 associated with the data hub 106 may determine one or more intended destinations to which a command, such as a data request (received from a data source), is to be transmitted by accessing the routing table 200. In an embodiment of the invention, a data request may include a destination identifier that refers to a unique ID for the intended destination. Upon receiving the data request from the data source, the data hub 106 may compare the destination identifier received in the data request with the stored destination identifiers included in the routing table 200. In one example embodiment of the invention, the DHP A 104a (data source) may send a data request to the data hub 106, destined for the client A 102a (intended destination) that has 003 as the destination ID. Thereafter, the routing module 116 may determine the intended destination by comparing the received destination identifier (i.e., 003 in this case) and the stored destination identifiers included in the routing table 200. According to an aspect of the invention, if a match is found, then the destination associated with the matched destination identifier may be determined as the intended destination. Thus, the routing module 116 may route the command present in the data request to the intended destination.

Although the above example embodiment considers the client as the intended destination and the DHP as the data source, any module of software component of a data hub system or a remote data hub system may be a data source or an intended destination as desired in various embodiments of the invention. Additionally, in accordance with an aspect of the invention, the routing table 200 may include identifiers for modules within the computer 108 and/or for modules situated remotely to the computer 108, for example, modules associated with the remote computer 118. In this regard, communication between a data source and a destination may be facilitated regardless of the location of the destination. There is no requirement that the data source identify a destination as a remote destination. Provided that the destination is identified by its unique ID, the data hub 106 will route the command. Thus, the routing of commands may be facilitated across multiple platforms. In certain embodiments of the invention, more than one routing table may be utilized as desired.

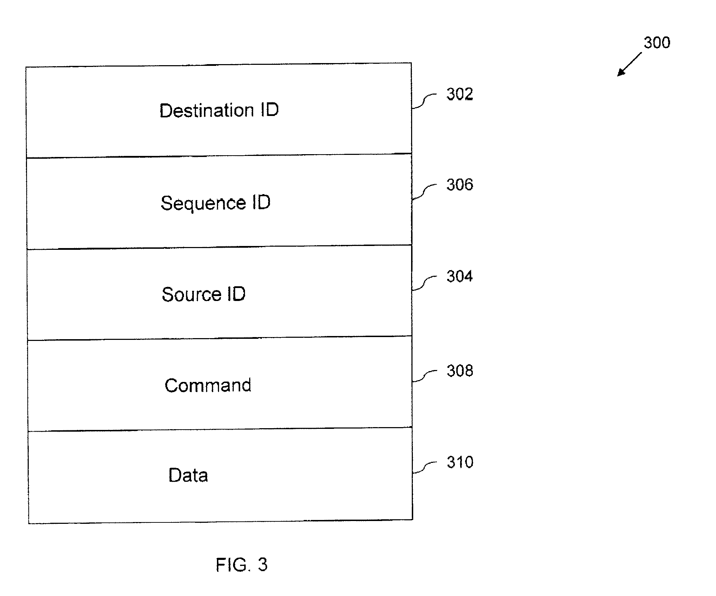

FIG. 3 is a depiction of one example transport packet 300 that may be communicated through a data hub, such as the data hub 106 illustrated in FIG. 1, in accordance with various embodiments of the invention. As described earlier, a data source may communicate a command, such as a request for data to one or more intended destinations by sending the command to the data hub 106. In various embodiments of the invention, the command may include a data packet similar to the transport packet 300 illustrated in FIG. 3. The transport packet 300 may include one or more destination identifiers 302 that represent respective unique Identifiers (IDs) of one or more destinations to whom the transport packet 300 is to be sent, a source identifier 304 that represents a unique ID of the data source that originates the sending of the transport packet 300, a command identifier (or a sequence ID) 306 that identifies a command 308 that is to be sent in the transport packet 300 and is to be executed, and a payload or data 310 associated with the command 308. In accordance with one embodiment of the invention, the data source may issue one command at a time.

In accordance with an example embodiment of the invention, a data hub, such as the data hub 106 shown in FIG. 1, may receive the transport packet 300 from the data source, and the data hub 106 may determine the one or more intended destinations by comparing the one or more destination identifiers 302 received in the transport packet 300 with stored destination identifiers in one or more routing tables, such as the routing table 200 shown in FIG. 2. In case a match for the destination identifier 302 is found in a stored list of destination identifiers, the data hub 106 may route the transport packet 300 to a destination associated with the matched destination identifier 302.

In an embodiment of the invention, the data hub 106 may use data normalization concepts to format the data originating from a DHP or client into a homogeneous format. Data normalization may help to reduce and eliminate data redundancy. According to an aspect of the invention, a command set may be defined and supported by the data hub 106. In one embodiment of the invention, the command set may provide commands to facilitate finding and managing DHPs and/or clients connected to the data hub 106. The command set may refer to a list or series of commands such as, but not limited to, getting data, setting data and updating data.

According to an aspect of the invention, a command passed in an electronic communication from a data source to an intended destination (through the data hub 106) may be a part of the command set defined and supported by the data hub 106. According to another aspect of the invention, information associated with the command set may be stored in one or more memory location(s) accessible by a destination interface module associated with the intended destination. In an example embodiment of the invention, if a DHP, such as the DHP 104a, is an intended destination, an interface at the DHP, such as the DHP interface 114a, may access the memory location(s) to identify the command passed in the electronic communication. Further, each DHP and/or client may support one or more command sets, in accordance with various embodiments of the invention.

Standardizing the command sets may facilitate interaction between the DHPs and/or clients in a relatively expected and standardized manner. Thus, the data hub 106, which communicates point-to-point data, may pull data from any of these sources (i.e., DHPs) and communicate with them because the interfaces are normalized. In a conventional system, different hardware devices in a computer system often have different communication interfaces. In accordance with an embodiment of the invention, a command set may be created to normalize data from all of the hardware devices and/or software components having different communication interfaces. The command set normalizes data so that the components in the computer system can communicate with components with different interfaces. Moreover, the creation of the command set allows for high speed routing of data between the data source and the destination via the data hub.

Various embodiments of the invention enable protocol compatibility between various DHPs and/or clients. Although the DHPs and/or clients may typically utilize different communication protocols, communications may be facilitated between various DHPs and/or clients using a data hub system 100 as described earlier in conjunction with the FIG. 1. The DHP interfaces, client interfaces, and data hub may facilitate the standardization of commands and, therefore, communication between various devices and/or software components even in the event that different protocols may typically be utilized by the various devices and/or software components.

Different types of data sources (for example, DHPs) may be used as desired for data communications that are routed through a data hub, such as the data hub 106. Each of these data sources may have some functionality layered on top of them to facilitate the data communication. In an embodiment of the invention, the communication layer that is utilized may be abstracted so that the data sources may be replaced without affecting existing modules in a system where data communication occurs. According to an aspect of the invention, data in a data packet sent from a data source to an intended destination via the data hub, may include information such as, but not limited to, command set data and generic data. A transport mechanism may be used to assemble the command set and generic data into the data packet and provide a way to move data from one point to another. In accordance with an embodiment of the invention, a communication link may exist between each client and the data hub 106, and between each DHP and the data hub 106. The data hub 106 may then manage the routing and/or transportation of data from one point to another.

In an example embodiment of the invention, a DHP, such as DHP 104a, may send a command, such as, a connect command, to the data hub 106. In accordance with an embodiment of the invention, the connect command establishes connection with the data hub 106 using a randomly generated universally unique identifier (UUID) as the key to the routing table 200. In an example embodiment of the invention, a client, such as the client 102a may send a connect command with the randomly generated UUID to the data hub 106. In accordance with another embodiment of the invention, the connect command establishes connection with the data hub 106 using a provided UUID as the key to the routing table 200. In an example embodiment of the invention, a client, such as the client 102a and/or a DHP, such as the DHP 104a, may send a connect command with the provided UUID to the data hub 106 so as to register with the data hub 106 with their respective unique IDs. In accordance with yet another embodiment of the invention, the connect command establishes connection with the data hub 106 using an entity ID of the module as the key to the routing table 200. As described earlier in conjunction with FIG. 2, the entity IDs may be stored source/destination identifiers, for example, 001 may be a destination ID of a client A, 002 may be a source ID of a DHP A and so on. In an example embodiment of the invention, a DHP, such as the DHP 104a, may send a connect command with its entity ID to the data hub 106 so as to register with the data hub 106 with the DHP 104's entity ID. In an embodiment of the invention, the entity ID may be specified in the command set.

Further, for each command, an ID of the source is assigned and sent to the destination. According to an aspect of the invention, the data hub 106 may check for one or more destinations of a message that received at the data hub 106, and then the data hub 106 may route the received message. However, the data hub 106 may not need to check the source end from where the message arrives. Once an intended destination, such as a DHP, receives the message from the data hub 106, the received message may be checked for an included command.

In one embodiment of the invention, a command set library may be accessible by each DHP and/or client in the computer system 108. This command set library may include command set implementation information associated with various commands. In this regard, a specification of command sets may be provided and followed in order to facilitate the sending and/or receiving of data from clients and/or DHPs. Further, in accordance with one embodiment of the invention, a rule may be built in the data hub to validate all DHPs so as to ensure that every DHP works correctly when they are plugged in the computer system. In an example embodiment of the invention, a DHP, such as the DHP 104b, may register using a unique entity ID 'X' with a data hub, such as the data hub 106, before initiating data exchange with the data hub 106. Thus, when the data hub 106 receives data request from the entity ID 'X', the data hub 106 recognizes that a sender of the data request is already registered and hence validates the sender.

In an embodiment of the invention, as a part of data normalization the data hub architecture may utilize data models, which include distinct information associated with various commands that can be performed, routed, and/or processed. The command set may specify the actions that may be performed and the data models may be utilized to store data that is associated with processing a command and with the data returned from the processing.

Further, as a part of data normalization, a proxy component connected to the data hub may perform serialization and/or de-serialization of data exchanged between the data source and one or more intended destinations. Serialization refers to a process of converting an object into a stream of bytes. In order to move data models through the data hub, the data models may be serialized. In this regard, the data hub may route a byte stream as a communication packet, including a command and the payload associated with a command. Serialization may also facilitate cross platform interoperability. For example, data may originate from a DHP in C++ format, and be routed to a .NET client. Further, using each data model, the proxy component may break down the data to a byte stream and then de-serialize from that stream.

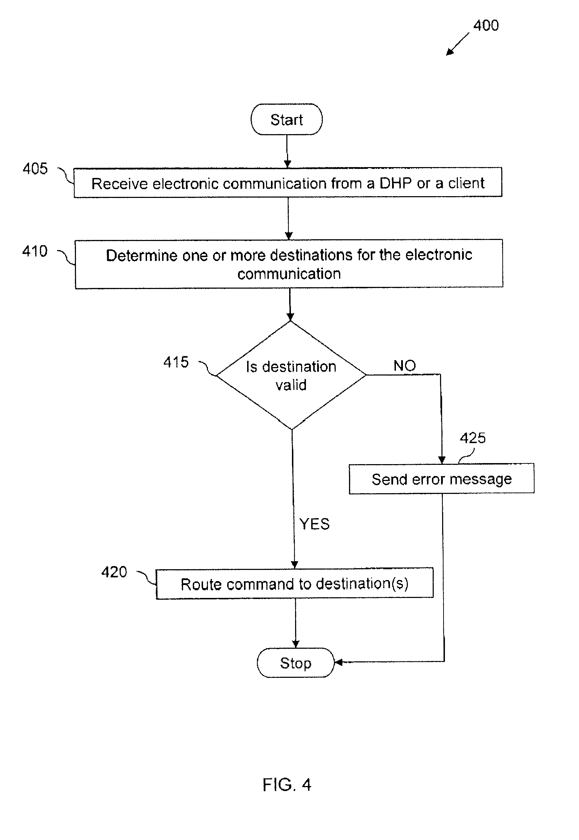

FIG. 4 is a flowchart illustrating one example method 400 for routing data through a data hub, such as data hub 106, according to an illustrative embodiment of the invention. According to various embodiments of the invention, data is routed through the data hub at high speed.

The method 400 may begin at block 405, in which a data hub 160 may receive an electronic communication or data from a data source. The data source may be a client or a DHP. In accordance with an embodiment of the invention, the data source may communicate a command, such as a request for data from one or more intended destination(s), to the data hub 106. The command may be included in a transport or data packet, in accordance with various embodiments of the invention. The transport packet, such as transport packet 300 illustrated in FIG. 3, may include a destination identifier that represents a unique ID of a destination to which the transport packet is to be sent, a source identifier that represents a unique ID of the data source that originates the sending of the transport packet, a command identifier (or a sequence ID) that describes a command that is sent in the transport packet and is to be executed, and a payload or data associated with the command. In an embodiment of the invention, if there are multiple intended destinations, then there will be multiple destination identifiers associated with each of these destinations. The electronic communication may be either within a single computer or between multiple computers located remotely.

Block 405 may be followed by block 410, in which the data hub 106 may determine one or more destinations for the electronic communication received from the data source. The data hub may use one or more routing tables stored in association with the data hub 106 to determine the intended destination(s). The routing table may include information associated with modules, such as DHPs and/or clients that are in communication with the data hub 106 and may also include entity IDs that may be unique for each of these modules. Upon receiving the electronic communication from the data source, the data hub 106 may compare the destination identifier(s) received in the electronic communication with the destination identifiers (i.e., entity IDs) stored in the routing table. In one example embodiment of the invention, a DHP A (data source) may send a data request, destined for a client A (intended destination), with 001 as the destination ID to the data hub 106. The data hub may determine the intended destination by comparing the received destination identifier (i.e., 001 in this case) and the stored destination identifiers (for example, 001 and 002) associated with modules in communication with the data hub 106.

Block 410 may be followed by decision block 415, in which the data hub 106 may check whether the destination ID in the received electronic communication is present in the destination IDs stored in the one or more routing tables. This allows the data hub to validate the one or more destination module(s).

In the event the destination ID in the received electronic communication is found in the destination IDs stored in the one or more routing table at block 415, then operation may continue at block 420. At block 420, the data hub 106 may validate the intended destination(s), and may route the electronic communication or a command present in the electronic communication to the intended destination(s). According to an aspect of the invention, the data hub 106 may route the electronic communication, received from the data source, to the intended destination(s) in a one-to-one manner.

Alternatively, in the event the destination ID in the received electronic communication is not found in the destination IDs stored in the one or more routing table at block 415, then operation may continue at block 425. At block 425, the data hub 106 may send an error message to the data source indicating that the electronic communication could not be routed. In an embodiment of the invention, the error message may indicate that the destination ID specified in the electronic communication (by the data source) is incorrect. In an example embodiment of the invention, the data source may re-send the electronic communication following the receipt of an error message. In accordance with one embodiment of the invention, the process of re-sending the electronic communication may be repeated until the data source receives a response command (from the data hub) with the sequence ID that is same as the sequence ID sent earlier by the data source in the electronic communication to the data hub.

Further, when the destination receives the command from the data hub 106, the destination may process the command. In an example embodiment of the invention, the destination may send a response command back to the data source through the data hub. In this example, the sequence ID may be the same as that received by the destination in the command routed to the destination by the data hub 106. For example, in one embodiment of the invention, the destination may receive data requests three times in a row by the same or different data sources via the data hub 106. In this example, sequence IDs may be defined for each of these data requests. Thus, the destination can respond for each of the data request to the data source via the data hub with the sequence IDs specified in the response commands. These sequence IDs may be the same as that received at the destination during the three data requests from the data hub.

The operations of the method 400 shown in FIG. 4 may end following block 420 or block 425.

The operations described in the method 400 of FIG. 4 do not necessarily have to be performed in the order set forth in FIG. 4, but instead may be performed in any suitable order. Additionally, in certain embodiments of the invention, more or less than all of the elements or operations set forth in FIG. 4 may be performed.

Embodiments of the invention may facilitate communicating data through the data hub without changing any of the command sets on the data hub. Moreover, data may be communicated such that it can be expanded and different data types may be communicated as desired in various embodiments of the invention.

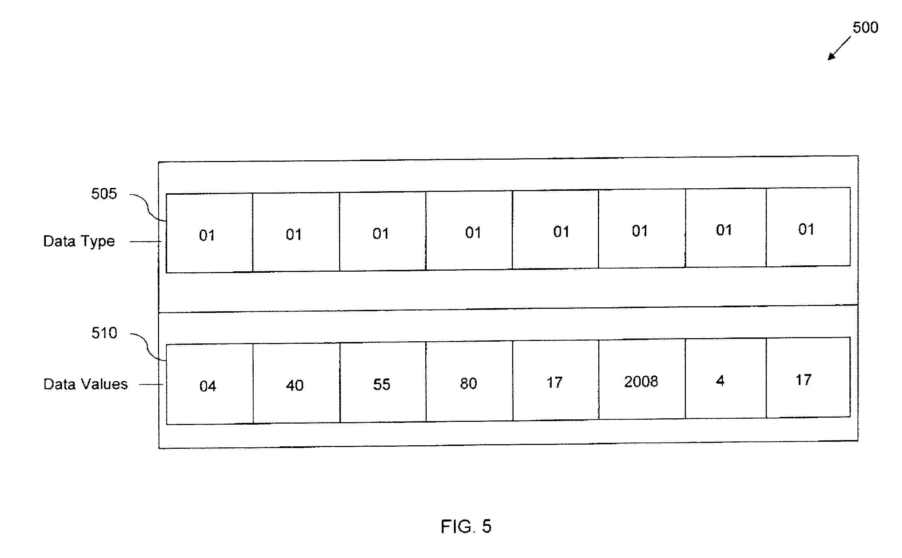

In various embodiments of the invention, a wide variety of different data types and/or combinations of data types may be communicated through a data hub 106. In an example embodiment of the invention, a generic data structure may be utilized to facilitate the communication or routing of data between a data source and one or more intended destinations. The generic data structure may facilitate the inclusion of any number of data types in the generic data structure in a manner that facilitates the relatively high speed routing of the included data. FIG. 5 is a depiction of one example generic data structure 500 that may be communicated through a data hub 106 in accordance with various embodiments of the invention. According to an aspect of the invention, data associated with a command, which is passed as an electronic communication from a data source to an intended destination (through the data hub), may include a data object. In certain embodiments of the invention, the data object may be a generic data structure 500 that stores any number of different data types as desired. The generic data structure 500 may be a data model that organizes data in a manner that facilitates its relatively high speed communication. The generic data structure 500 may include a first integer data array 505 that includes one or more integers that define respective type IDs to identify the types of data included in the generic data structure. Additionally, the generic data structure 500 may include a second data array 510 that includes the data itself. The data may be an array of data values 510, according to an aspect of the invention. According to an aspect of the invention, any type of data may be included in the generic data structure 500 as desired in various embodiments of the invention. Example data types may include standard data types, such as, integers, booleans, floating point numbers, strings, etc. Example data types may also include more complex data types, such as user defined arrays, user defined records, etc.

For example, as shown in the FIG. 5, in one generic data structure, data values, such as 04, 40, 55, 80, 12, 2008, 4 and 17 may be included as data in the data array 510 of a generic data structure 500 that may be routed through the data hub 106. Moreover, the data values may be of the same native type or of different native types. For data parameters associated with a day, minute, second, millisecond, month, year, day of week and hour, the data types associated with the parameters may be any suitable data type that facilitates the storage of the corresponding data values in the data array 510. Each of the types of data may be identified by an integer value associated with the data type. For example, each of the data parameters may be an integer. In this example, an integer value associated with an integer data type would be included in the data type array 505 of the generic data structure 500. For example, as shown in FIG. 5, the data type array 505 includes values of "01" for each data type, and the "01" may represent an integer data type. In another example, other data types may be included in the generic data structure 500. For example, the day of the week data type may be a string data type (e.g., "Monday," "Tuesday," "Wednesday," etc.). In this example, the data type array 510 of the generic data structure 500 may include an integer value associated with a string data type in the cell or block of the data type array associated with the day of the week. For example, the integer "03" may be utilized to represent a string data type, and the integer "03" may be included in the data type array 510 to identify the day of the week parameter as a string. As discussed above, any number of data types may be included in a generic data structure 500 as desired in various embodiments of the invention, and each of the various data types may be identified by a respective integer value associated with a data type. Additionally, any number of digits may be utilized in the integers stored in the data type array 505 as desired in various embodiments of the invention.

The data within a generic data structure 500 may be communicated between various modules (for example, a client or a DHP) through a data hub, for example, data hub 106. In an example embodiment of the invention, the generic data structure 500 may pass configuration information, historical data, current data, alarm statuses, request parameters etc. The generic data structure 500 may facilitate the inclusion of any amount of data in a data payload. In this regard, the amount of data that is included may be scalable or expandable as desired. Furthermore, the data type array 505 of the generic data structure may facilitate the identification of the data that is included in the generic data structure 500. In this regard, the generic data structure 500 may be self-describing. An intended destination or other recipient of the generic data structure 500 may utilize the data type array 505 to identify the data types that are included in the generic data structure 500 and, accordingly, the number of bytes allocated to each item of data included in the generic data structure 500. In this regard, the generic data structure 500 may be routed to a destination as a serialized data stream and easily separated out into its various components after it is received.

In one embodiment of the invention, the generic data structure 500 may be utilized to enable all communication. For example, the data hub 106 may communicate the example generic structure 500 to an intended destination that will process a command associated with the generic data structure 500. An example of the generic data structure may be as follows:

```
 GenericDataStructure
 {
 INT[] DataParameterType;
 OBJECT[] DataValue;
 }
 Where, DataParameterType specifies what the corresponding DataValue represents
 and the OBJECT type represents a generic type that may hold any native or complex
 data type.
 Following is an example pseudo code for using the GenericDataStructure:
 stTimeStructure
 {
 int Millisecond;
 int Second;
 int Minute;
 int Hour;
 int Day;
 int DayOfWeek;
 int Month;
 int Year;
 }
 100 - TYPE_MILLISECOND
 101 - TYPE _SECOND
 102 - TYPE_MINUTE
 103 - TYPE_HOUR
 104 - TYPE_DAY
 105 - TYPE_DAY_OF_WEEK
 106 - TYPE_MONTH
 107 - TYPE_YEAR
 1:26:34.324PM June 15, 2007
 stTimeStructure object;
 object.Millisecond = 324;
 object.Second = 34;
 object.Minute = 26;
 object.Hour = 13;
 object.Day = 15;
 object.DayOfWeek = 5;
 object.Month = 6;
 object.Year = 2007;
 SetTime (stTimeStructure);
 GenericDataStructure object;
 object.DataParameterType = new INT[8];
 object.DataValue = new OBJECT[8];
 object.DataParameterType[0] = TYPE_MILLISECOND;
 object.DataParameterType[1] = TYPE_SECOND;
 object.DataParameterType[2] = TYPE_MINUTE;
 object.DataParameterType[3] = TYPE_HOUR;
 object.DataParameterType[4] = TYPE_DAY;
 object.DataParameterType[5] = TYPE_DAY_OF_WEEK;
 object.DataParameterType[6] = TYPE_MONTH;
 object.DataParameterType[7] = TYPE_YEAR;
 object.DataValue[0] = (INT)324;
 object.DataValue[1] = (INT)34;
 object.DataValue[2] = (INT)26;
 object.DataValue[3] = (INT)13;
 object.DataValue[4] = (INT)15;
 object.DataValue[5] = (INT)5;
 object.DataValue[6] = (INT)6;
 object.DataValue[7] = (INT)2007;
 SetTime(GenericDataStructure);
```

In the above example of GenericDataStructure, a SetTime command may be utilized to return a generic data structure including a requested time. The command and associated data may be returned to a requesting module in response to a command that requests the data, for example, a GetTime command. In this example, a destination may return 1:26:34.324 PM June 15, 2007 as a response to a requesting module. The data values included in the returned generic data structure may include 324, 34, 26, 13, 15, 5, 6 and 2007 and their corresponding types include millisecond, second, minute, hour, day of week, month and year, respectively. The data type array of the generic data structure may include integer values of, 100, 101, 102, 103, 104, 105, 106 and 107 as identifiers of the various data types. The integers provided in this example may be specific to the various data types as opposed to utilizing a common data type for all integer values of data, as set forth in the example described above with reference to FIG. 5. Both approaches, a combination of the approaches, or other approaches may be utilized as desired in example generic data structures.

In accordance with an aspect of the invention, functions may become generic as the associated generic data structures are self-describing. Instead of using several functions to facilitate data commands, a single function may be used where the data sent and received is self-describing. The generic data structure may even handle complex data, in accordance with various embodiments of the invention. An example of handling of complex data using the generic data structure may be as follows:

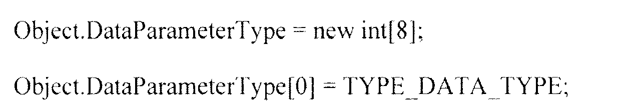

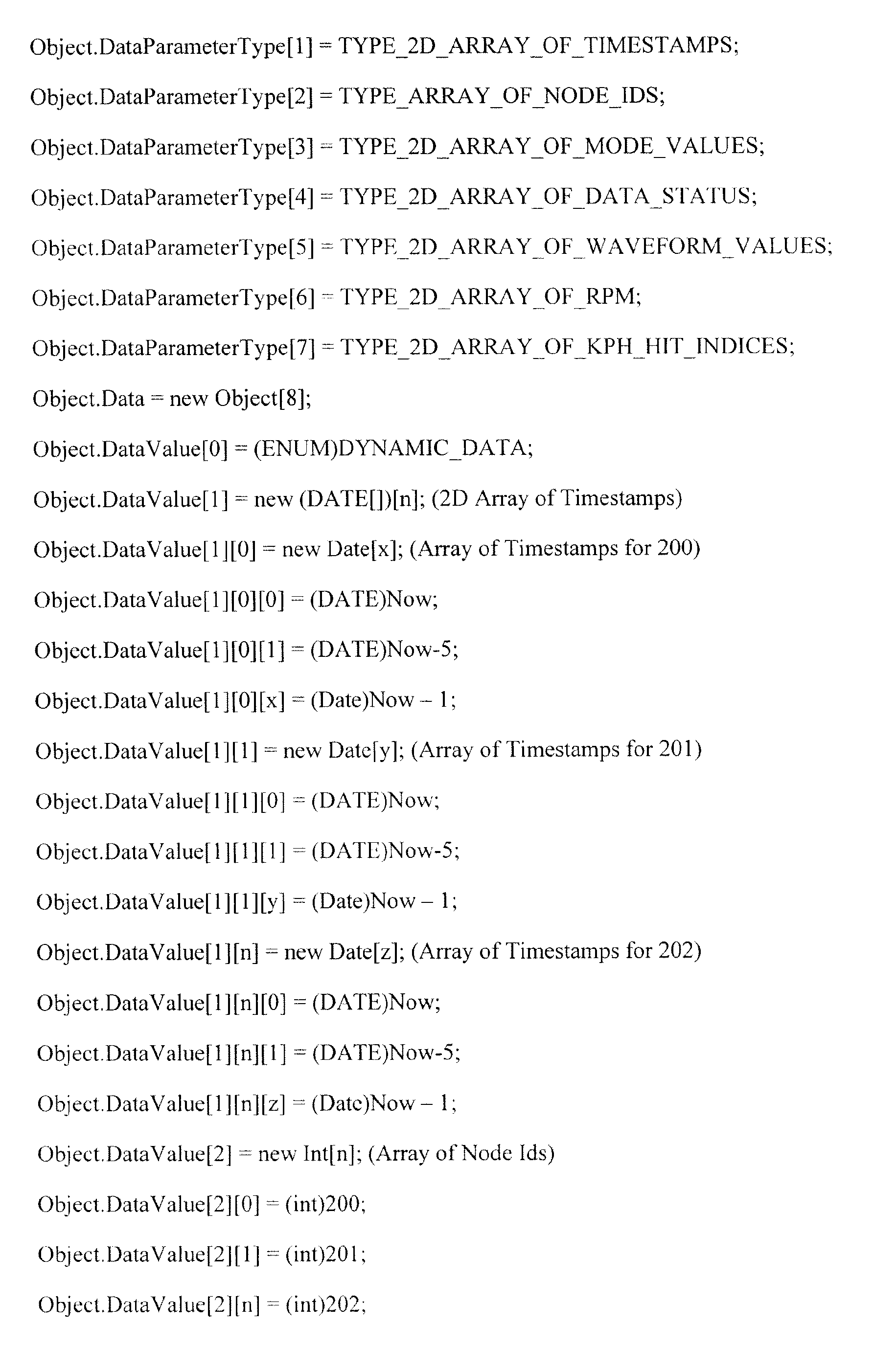

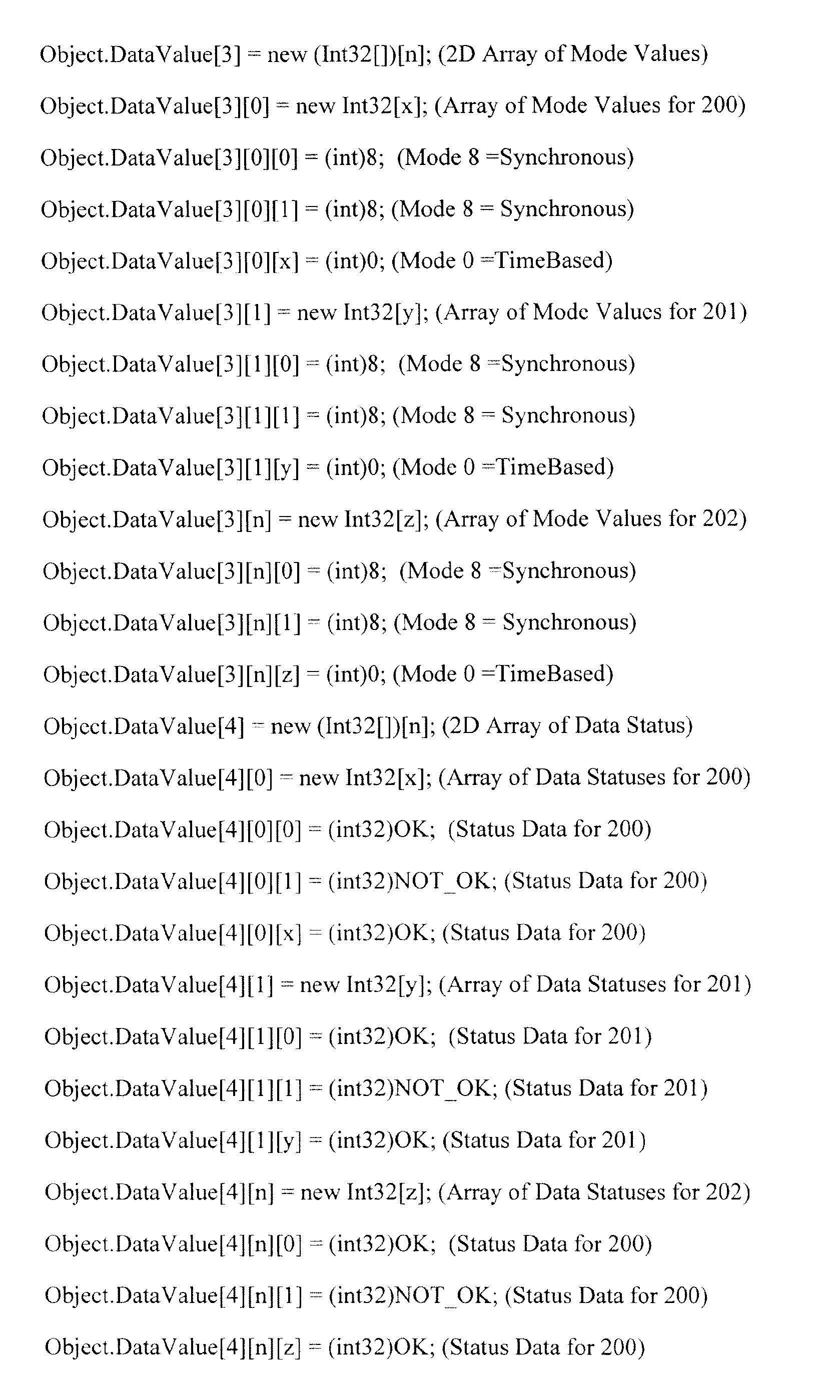

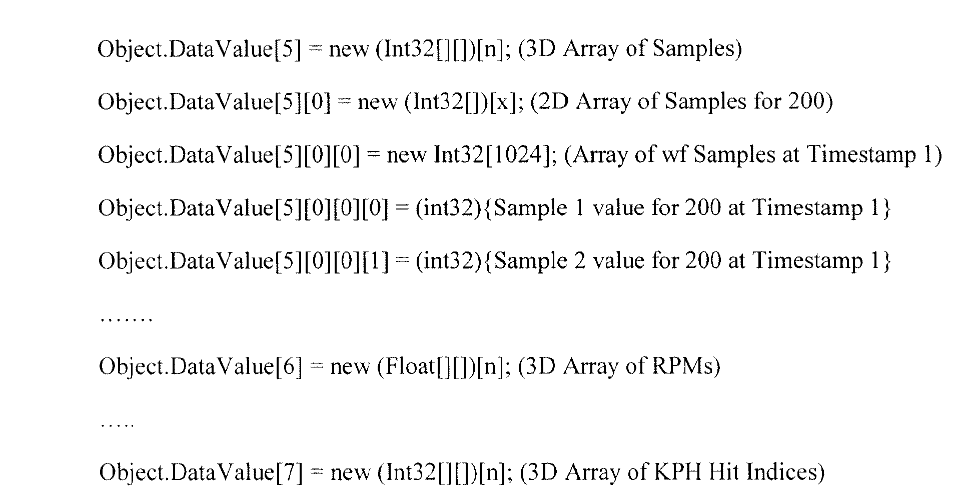

In the above example of a GenericDataStructure, eight integer values may be included in a data type array that define the data included in the generic data structure. Each of the defined data types may be an array that is stored in the data value array of the generic data structure. These arrays may be either single dimensional, two dimensional or three dimensional arrays. Moreover, data values may be defined for the cells of each of the various arrays stored in the data value array of the generic data structure.

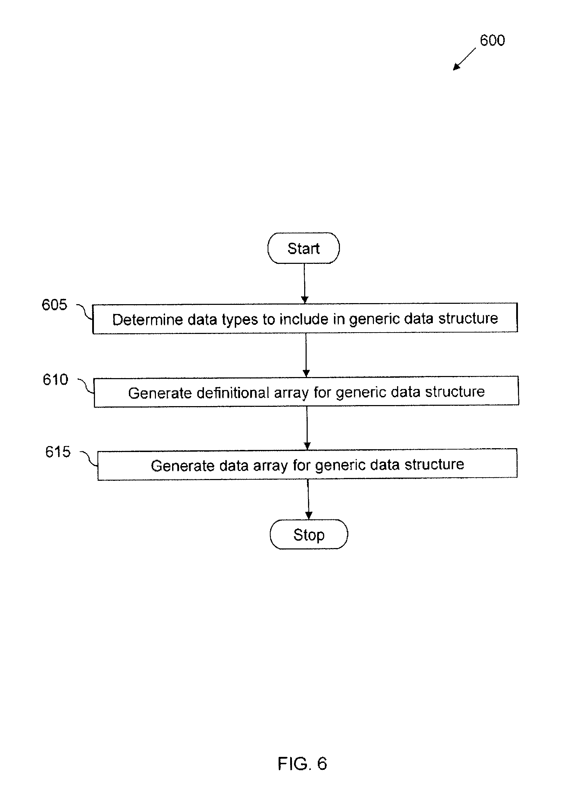

FIG. 6 is a flowchart of one example method 600 for forming a generic data structure, according to an illustrative embodiment of the invention. The method 600 may begin at block 605, in which the data types to be included in a generic data structure may be determined or otherwise identified. In an example embodiment of the invention, the data types may be hour, minute, second and millisecond.

Block 605 may be followed by block 610, in which a definitional array for the generic data structure may be generated. The definitional array, also referred to as a data type array, may identify the types of data (or data values) that are included within the generic data structure. According to an aspect of the invention, each data value of the definitional array may be an integer value associated with a respective data type that is included within the generic data structure. The data values included in the returned generic data structure may include 324, 34, 26, 13, 15, 5, 6 and 2007 and their corresponding types include millisecond, second, minute, hour, day of week, month and year, respectively. The data type array of the generic data structure may include integer values of, 100, 101, 102, 103, 104, 105, 106 and 107 as identifiers of the various data types.

Block 610 may be followed by block 615, in which a data array for the generic data structure may be generated. The data array may include data associated with each of the data types included in the generic data structure. In the example above with data types of hour, minute, second and millisecond, the generated data array may be an array of four data values. In an example embodiment of the invention, the data values for the corresponding hour, minute, second and millisecond may be 17, 45, 30 and 200.

The operations described in the method 600 of FIG. 6 do not necessarily have to be performed in the order set forth in FIG. 6, but instead may be performed in any suitable order. Additionally, in certain embodiments of the invention, more or less than all of the elements or operations set forth in FIG. 6 may be performed.

The data hub architecture of the invention may facilitate relatively high speed transfer of data within a single computer and/or between multiple computers. Additionally, the data hub architecture may provide data termination knowledge and may resolve issues with cross-protocol compatibility between different hardware devices.

The technical effect of the invention is that data may be communicated between different modules, through a data hub, within a single computer or between multiple computers at a high speed using a data hub as disclosed in various embodiments of the invention. Moreover, modules, which understand different protocols, are able to exchange data with each other using the data hub. Additionally, modules may be added, removed and/or replaced without affecting exchange of data between existing modules.

Embodiments of the invention are described above with reference to block diagrams and schematic illustrations of methods and systems according to embodiments of the invention. It will be understood that each block of the diagrams and combinations of blocks in the diagrams can be implemented by computer program instructions. These computer program instructions may be loaded onto one or more general purpose computers, special purpose computers, or other programmable data processing apparatus to produce machines, such that the instructions which execute on the computers or other programmable data processing apparatus create means for implementing the functions specified in the block or blocks. Such computer program instructions may also be stored in a computer-readable memory that can direct a computer or other programmable data processing apparatus to function in a particular manner, such that the instructions stored in the computer-readable memory produce an article of manufacture including instruction means that implement the function specified in the block or blocks.

Certain embodiments of the invention are applicable for any device, which is used for routing electronic data. Some examples of such devices include, but are not limited to, a network routing device within a computer, a software-based router within a computer, an enterprise service bus, other types of routers, a network switch, a server, etc. It will be apparent that any example taken provided in the foregoing specification is merely provided for explanation purposes and does not limit the scope of the invention by any means.

While the invention has been described in connection with what is presently considered to be the most practical and various embodiments, it is to be understood that the invention is not to be limited to the disclosed embodiments, but on the contrary, is intended to cover various modifications and equivalent arrangements included within the scope of the appended claims.

This written description uses examples to disclose embodiments of the invention, including the best mode, and also to enable any person skilled in the art to practice the invention, including making and using any devices or systems and performing any incorporated methods. The patentable scope of embodiments of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A data hub for electronically routing data, the data hub comprising:
   an interface module operable to receive an electronic communication from a data source, the electronic communication comprising:
      a destination identifier associated with an intended destination for the communication;
      a command identifier associated with a command included in the communication; and
      a payload comprising data associated with the command; and
      a routing module operable to (i) determine, based at least in part on the destination identifier, the intended destination, and (ii) route the electronic communication to the intended destination.
2. The data hub of clause 1, wherein the command is one of a plurality of commands included in a command set associated with the data hub.
3. The data hub of clause 2, wherein information associated with the command set is stored in at least one memory location accessible by a destination interface module associated with the intended destination, and
   wherein the destination interface module is operable to access the at least one memory location in order to identify the command.
4. The data hub of clause 1, wherein the routing module is operable to determine the intended destination by (i) accessing a routing table associated with a plurality of destinations, (ii) comparing the received destination identifier to a plurality of stored destination identifiers included in the routing table, and (iii) identifying the intended destination by identifying a match between the received destination identifier and one of the plurality of stored destination identifiers included in the routing table.
5. The data hub of clause 1, wherein the data source comprises one or more data hub plug-in's.
6. The data hub of clause 1, wherein the intended destination comprises one of a client application executing on the computer, a data storage application associated with the computer, or an interface to data collection hardware associated with the computer.
7. The data hub of clause 1, wherein the intended destination is located remotely to the computer, and
   wherein the data hub is further operable to communicate with a remote data hub associated with the intended destination in order to facilitate the electronic routing of the electronic communication.
8. The data hub of clause 1, wherein the routing of the electronic communication by the routing module comprises one to one routing between the data source and the intended destination.
9. The data hub of clause 1, wherein the data associated with the command comprises a data object, the data object comprising:
   a first data array comprising a plurality of integers defining respective data types associated with data values included in the data object; and
   a second data array comprising the data values.
10. The data hub of clause 9, wherein the data object comprises a generic data structure that facilitates the storage of a plurality of different data types.
11. A method for electronically routing data, the method comprising:
   electronically receiving an electronic communication from a data source, the electronic communication comprising:
      a destination identifier associated with an intended destination for the communication;
      a command identifier associated with a command included in the communication; and
      a payload comprising data associated with the command;
      determining, based at least in part on the destination identifier, the intended destination; and
      routing the electronic communication to the intended destination.
12. The method of clause 11, wherein the command is one of a plurality of commands included in a command set associated with a software module that facilitates the routing of the electronic communication.
13. The method of clause 12, further comprising storing information associated with the command set in at least one memory location accessible by a destination interface module associated with the intended destination, and
   accessing, by the destination interface module, the at least one memory location in order to identify the command.
14. The method of clause 11, wherein determining the intended destination comprises:
   accessing a routing table associated with a plurality of destinations;
   comparing the received destination identifier to a plurality of stored destination identifiers included in the routing table; and
   identifying the intended destination by identifying a match between the received destination identifier and one of the plurality of stored destination identifiers included in the routing table.
15. The method of clause 11, wherein the data source comprises one or more data hub plug-in's.
16. The method of clause 11, wherein the intended destination comprises one of a client application executing on the computer, a data storage application associated with the computer, or an interface to data collection hardware associated with the computer.
17. The method of clause 11, wherein the intended destination is located remotely to the computer, and further comprising:
   communicating with a remote data hub associated with the intended destination in order to facilitate the electronic routing of the electronic communication to the intended destination.
18. The method of clause 11, wherein routing of the electronic communication comprises facilitating a one to one routing between the data source and the intended destination.
19. The method of clause 11, wherein the data associated with the command comprises a data object, the data object comprising:
   a first data array comprising a plurality of integers defining respective data types associated with data values included in the data object; and
   a second data array comprising the data values.
20. The method of clause 19, wherein the data object comprises a generic data structure that facilitates the storage of a plurality of different data types.

## Claims

1. A data hub (106) for electronically routing data, the data hub (106) comprising:
an interface module (110) operable to receive an electronic communication (300) from a data source (102a-n, 104a-n, 122, 124), the electronic communication (300) comprising:
a destination identifier (302) associated with an intended destination (102a-n, 104a-n, 122, 124) for the communication (300);
a command identifier (306) associated with a command (308) included in the communication (300); and
a payload comprising data (310) associated with the command (308); and
a routing module (116) operable to (i) determine, based at least in part on the destination identifier (302), the intended destination (102a-n, 104a-n, 122, 124), and (ii) route the electronic communication (300) to the intended destination (102a-n, 104a-n, 122, 124).

2. The data hub (106) of claim 1, wherein the command (308) is one of a plurality of command included in a command set associated with the data hub (106).

3. The data hub (106) of claim 2, wherein information associated with the command set is stored in at least one memory location accessible by a destination interface module (112a-n, 114a-n) associated with the intended destination (102a-n, 104a-n, 122, 124), and
wherein the destination interface module (112a-n, 114a-n) is operable to access the at least one memory location in order to identify the command (308).

4. The data hub (106) of any of the preceding claims, wherein the routing module (116) is operable to determine the intended destination (102a-n, 104a-n, 122, 124) by (i) accessing a routing table (200) associated with a plurality of destinations, (ii) comparing the received destination identifier (302) to a plurality of stored destination identifiers included in the routing table (200), and (iii) identifying the intended destination (102a-n, 104a-n, 122, 124) by identifying a match between the received destination identifier (302) and one of the plurality of stored destination identifier included in the routing table (200).

5. The data hub (106) of any of the preceding claims, wherein the data source (102a-n, 104a-n, 122, 124) comprises one or more data hub plug-in's (104a-n, 122, 124).

6. The data hub (106) of any of the preceding claims, wherein the intended destination (102a-n, 104a-n, 122, 124) comprises one of a client application executing on a computer (108), a data storage application associated with the computer (108), or an interface to data collection hardware associated with the computer (108).

7. The data hub (106) of any of the preceding claims, wherein the intended destination (102a-n, 104a-n, 122, 124) is located remotely to a computer (108), and
wherein the data hub (106) is further operable to communicate with a remote data hub (130) associated with the intended destination (102a-n, 104a-n) in order to facilitate the electronic routing of the electronic communication (300).

8. The data hub (106) of any of the preceding claims, wherein the routing of the electronic communication (300) by the routing module (116) comprises one to one routing between the data source (102a-n, 104a-n, 122, 124) and the intended destination (102a-n, 104a-n, 122, 124).

9. The data hub (106) of any of the preceding claims, wherein the data (310) associated with the command (308) comprises a data object, the data object comprising:
a first data array comprising a plurality of integers (505) defining respective data types associated with data values (510) included in the data object; and
a second data array comprising the data values (510).

10. The data hub (106) of claim 9, wherein the data object comprises a generic data structure (500) that facilitates the storage of a plurality of different data types.

11. A method (400) for electronically routing data, the method (400) comprising:
electronically receiving (405) an electronic communication (300) from a data source (102a-n, 104a-n, 122, 124), the electronic communication comprising:
a destination identifier (302) associated with an intended destination (102a-n, 104a-n, 122, 124) for the communication;
a command identifier (306) associated with a command (308) included in the communication; and
a payload comprising data (310) associated with the command (308);
determining (410), based at least in part on the destination identifier (302), the intended destination (102a-n, 104a-n, 122, 124); and
routing (420) the electronic communication (300) to the intended destination.

12. The method (400) of claim 11, wherein the command (308) is one of a plurality of commands included in a command set associated with a software module (106) that facilitates the routing (420) of the electronic communication.

13. The method (400) of claim 12, further comprising storing information associated with the command set in at least one memory location accessible by a destination interface module (112a-n, 114a-n) associated with the intended destination (102a-n, 104a-n, 122, 124), and
accessing, by the destination interface module (112a-n, 114a-n), the at least one memory location in order to identify the command (308).

14. The method (400) of any of claims 11 to 13, wherein determining the intended destination (102a-n, 104a-n, 122, 124) comprises:
accessing a routing table (200) associated with a plurality of destinations;
comparing the received destination identifier (302) to a plurality of stored destination identifiers included in the routing table (200); and
identifying the intended destination (102a-n, 104a-n, 122, 124) by identifying a match between the received destination identifier (302) and one of the plurality of stored destination identifiers included in the routing table (200).

15. The method (400) of any of claims 11 to 14, wherein the data source (102a-n, 104a-n, 122, 124) comprises one or more data hub plug-in's (104a-n, 122, 124).
